# EUROPEAN PATENT SPECIFICATION

(11) **EP 1 930 079 B1**
(45) Date of publication and mention of the grant of the patent: **18.05.2011**
(21) Application number: 08000658.8
(22) Date of filing: 18.08.2004
(51) Int. Cl.: B01L 9/06, G01N 1/34

(54) **Rack for extracting apparatuses**
Ständer für Extraktionsvorrichtungen
Étagère pour appareils d'extraction

(30) Priority: 19.08.2003 JP 2003295089; 19.08.2003 JP 2003295090
(43) Date of publication of application: 11.06.2008
(62) Divisional of application: 04019620.6
(73) Proprietor: FUJIFILM Corporation, Minato-ku Tokyo (JP)
(72) Inventor: Seto, Yoshihiro, Kanagawa-ken (JP)
(74) Representative: Klunker . Schmitt-Nilson . Hirsch

(56) References cited:
- EP-A- 0 679 887
- US-A- 5 260 028
- US-A- 5 283 039

## Description

### BACKGROUND OF THE INVENTION

### Field of the Invention

This invention relates to a rack for an extracting apparatus according to the preamble of claim 1. Such rack loads the at least one extracting cartridge.

### Description of the Related Art

As extracting methods, for example in techniques for extracting a nucleic acid, a centrifugal technique, a technique utilizing magnetic beads, a technique utilizing a filter, and the like, have heretofore been known.

For example, there has been proposed a nucleic acid extracting apparatus utilizing filters. With the proposed nucleic acid extracting apparatus, a plurality of filter tubes, each of which accommodates a filter therein, are set on a rack, and sample liquids are respectively injected into the filter tubes. Also, a region around a bottom of the rack is closed with an air chamber via a sealing material, and a pressure within the air chamber is reduced. Areas within all of the filter tubes are thus simultaneously subjected to suction from discharging sides of the filter tubes, and the sample liquids contained in the filter tubes are thus caused to pass through the filters of the filter tubes. Nucleic acids contained in the sample liquids are thus adsorbed to the filters of the filter tubes. Thereafter, a washing liquid and an eluting liquid are successively injected into the filter tubes and subjected to suction at a reduced pressure. The nucleic acids having been adsorbed to the filters of the filter tubes are thus washed with the washing liquid and eluted from the filters. (The aforesaid nucleic acid extracting apparatus utilizing filters is described in, for example, U.S. Patent No. 5,645,723.)

As described above, a separation purification method of a nucleic acid, comprising the step of using a predetermined filter for separating and recovering the sample liquid after the nucleic acid contained in the sample liquid is adsorbed to the filter, is disclosed in U.S. patent Laid-Open No. 20030170664. Further, a method for extracting by injecting the sample liquid into the separation purification unit including the filter and pressurizing the sample liquid is adopted.

However, the conventional nucleic acid extracting apparatus described above has the problems in that, in cases where the nucleic acid extracting apparatus has a large size so as to be appropriate for analyses of large amounts of samples and in cases where the number of the samples is small, and the frequency of analyses is low, the cost of the nucleic acid extracting apparatus is not capable of being kept low, and the processing efficiency is not capable of being kept high.

Also, as for nucleic acid extracting apparatuses, it is desired that the processing is capable of being performed quickly and efficiently without any contamination occurring, and that the sizes of the nucleic acid extracting apparatuses are capable of being kept small. However, the problems described below occur with the nucleic acid extracting apparatus proposed in U.S. patent No. 5,645,723.

Specifically, with a nucleic acid extracting apparatus, in which the areas within all of the filter tubes are simultaneously subjected to suction as in the cases of the nucleic acid extracting apparatus proposed in U.S. patent No. 5,645,723, in cases where the sample liquids have different characteristics as in the cases of sampled whole blood, it is necessary for the rack for holding the sample liquids, and the like, to have a specific structure that allows the constitution of a suction chamber. Therefore, the rack is not capable of being easily dismounted from the nucleic acid extracting apparatus for the purpose of setting the filter tubes, and the like, on the rack, and it is necessary for complicated preparation work to be performed. Therefore, the processing efficiency is not capable of being enhanced.

In cases where enhancement of the processing efficiency with the nucleic acid extracting apparatus of the type described above and reduction in size of the nucleic acid extracting apparatus of the type described above are intended, if a setting mistake, or the like, is made" during the loading of various members used, various expendables used, and the like, there will be the risk that malfunction, an erroneous, measurement, and the like, will be caused to occur. Also, if the processing liquid, the discharged liquid, or the like, clings to the members used, the expendables used, or the like, during the loading of the members used, the expendables used, or the like, there will be the risk that contamination will be caused to occur.

A method for recovering the liquid by adsorbing the nucleic acid to the filter by pressurization is disclosed in U.S. Patent Laid-Open No. 20030170664. However, a specific extracting apparatus is not disclosed. In the extracting apparatus which adopts the pressurization method, problems will arise in its pressurization control method. Problems will also arise in contamination due to scattering of the discharged liquid during pressurization, reliability in sealing, or the like.

EP-A-0 679 887 discloses a rack for an extracting apparatus in accordance with the preamble of claim 1. In the prior art rack, plural openings having a circular cross section are provided, the openings being adapted to receive a flare which is formed at an input side of each extracting cartridge.

### SUMMARY OF THE INVENTION

The object of the present invention is to provide a rack for an extracting apparatus, which rack enables an extracting cartridge, and the like, to be loaded with good workability such that there is no risk of a setting mistake being made, and which rack enables problems with regard to contamination to be prevented from occurring.

The present invention provides a rack for an extracting apparatus having the features of claim 1.

Preferred embodiments are defined by the dependent claims.

Further, another rack for an extracting apparatus according to the present invention is a rack wherein the at least one extracting cartridge is provided with a discharging bottom end for liquid discharging,
the cartridge holder holds the at least one extracting cartridge in a state in which the discharging bottom end of the at least one extracting cartridge is exposed to the exterior, and
the cartridge holder allows the at least one extracting cartridge, which has been used, to fall down and discharges the at least one extracting cartridge, which has been used, such that only the part of the at least one extracting cartridge other than the discharging bottom end passes through the cartridge holder.

Each of the racks for an extracting apparatus in accordance with the present invention should preferably be modified such that the cartridge holder is provided with means for releasing the at least one extracting cartridge from a state, in which the at least one extracting cartridge is held by the cartridge holder, with an operator being free from a touch on the at least one extracting cartridge, the at least one extracting cartridge being thereby allowed to fall down from the cartridge holder and discharged.

Also, each of the racks for an extracting apparatus in accordance with the present invention should preferably be modified such that the at least one extracting cartridge is provided with a discharging bottom end for liquid discharging,
the cartridge holder holds the at least one extracting cartridge in a state in which the discharging bottom end of the at least one extracting cartridge is exposed to the exterior, and
the cartridge holder allows the at least one extracting cartridge, which has been used, to fall down and discharges the at least one extracting cartridge, which has been used, such that only the part of the at least one extracting cartridge other than the discharging bottom end passes through the cartridge holder.

Further, each of the racks for an extracting apparatus in accordance with the present invention should preferably be modified such that the cartridge holder holds a plurality of extracting cartridges, and
the cartridge holder allows the plurality of the extracting cartridges to fall down together by a single operation and thereby discharges the plurality of the extracting cartridges.

Also, the rack for an extracting apparatus in accordance with the present invention should preferably be modified such that the cartridge holder, which holds the at least one extracting cartridge, is releasably secured to the rack, and
the cartridge holder is dismounted from the rack at the time at which the at least one extracting cartridge is to be discharged from the cartridge holder.

### BRIEF DESCRIPTION OF THE DRAWINGS

Figure 1 is a perspective view showing a nucleic acid extracting apparatus, on which an embodiment of the rack in accordance with the present invention has been loaded, with a cover being removed for clearness,
Figure 2 is a block diagram showing mechanisms of the nucleic acid extracting apparatus of Figure 1,
Figure 3 is a perspective view showing the embodiment of the rack in accordance with the present invention,
Figure 4 is a perspective view showing the rack of Figure 3 in the state in which the rack is being used,
Figure 5 is a perspective view showing an urging structure of the rack with part of the rack being broken away for clearness,
Figure 6 is a perspective view showing a bottom structure of the rack,
Figure 7 is a perspective view showing how an extracting cartridge is loaded into a cartridge holder of the rack and discharged from the cartridge holder,
Figure 8 is a perspective view showing an internal structure of the cartridge holder with part of the cartridge holder being broken away for clearness,
Figure 9 is a perspective view showing a different example of a cartridge holder, which is in an open state,
Figures 10A to 10G are flow diagrams showing an extracting operation of the nucleic acid extracting apparatus, and
Figure 11 is a perspective view showing the extracting cartridge.

### DESCRIPTION OF THE PREFERRED EMBODIMENTS

The present invention will hereinbelow be described in further detail with reference to the accompanying drawings.

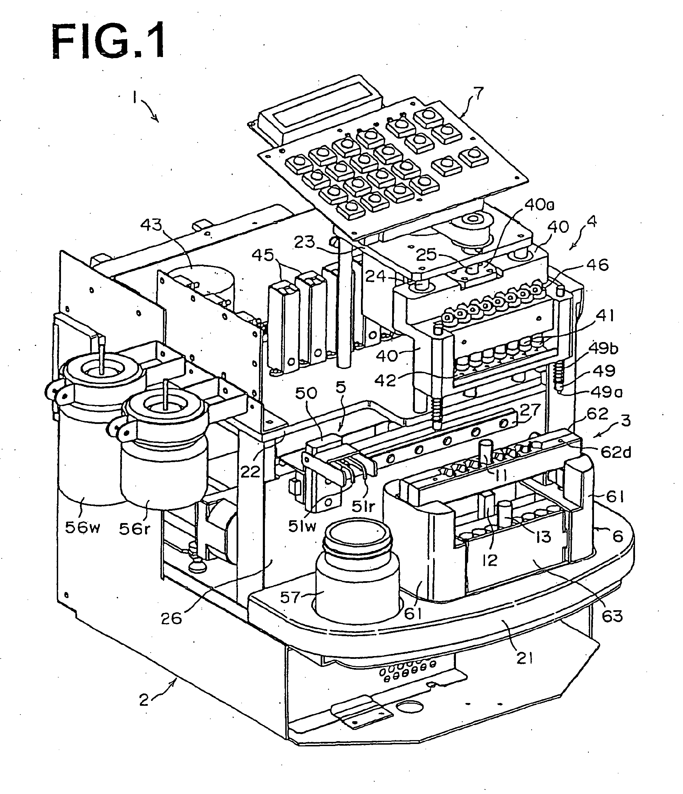

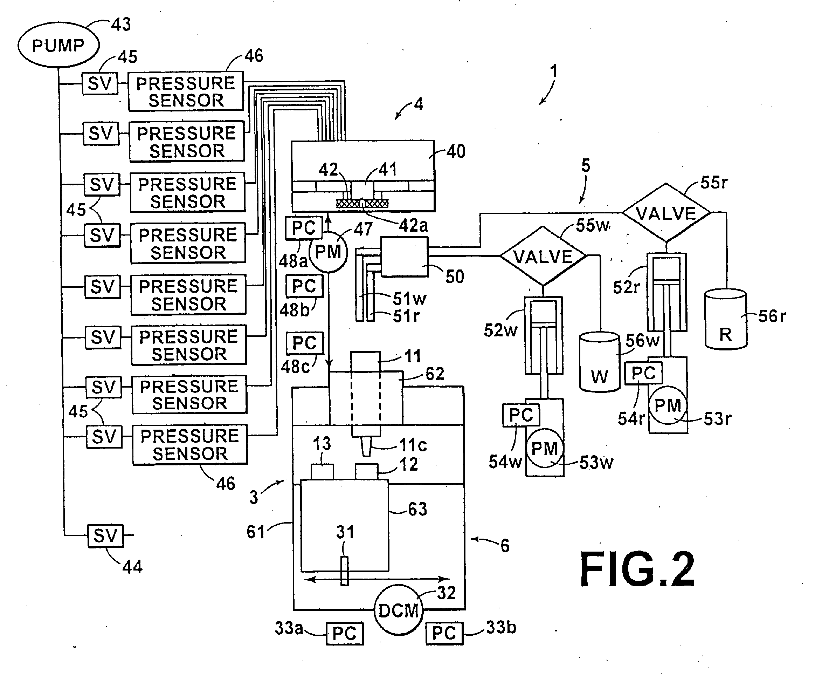

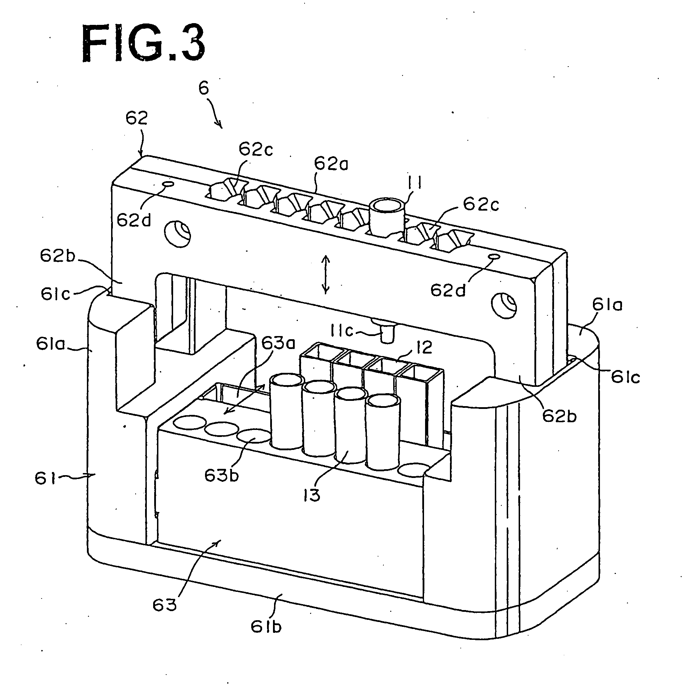

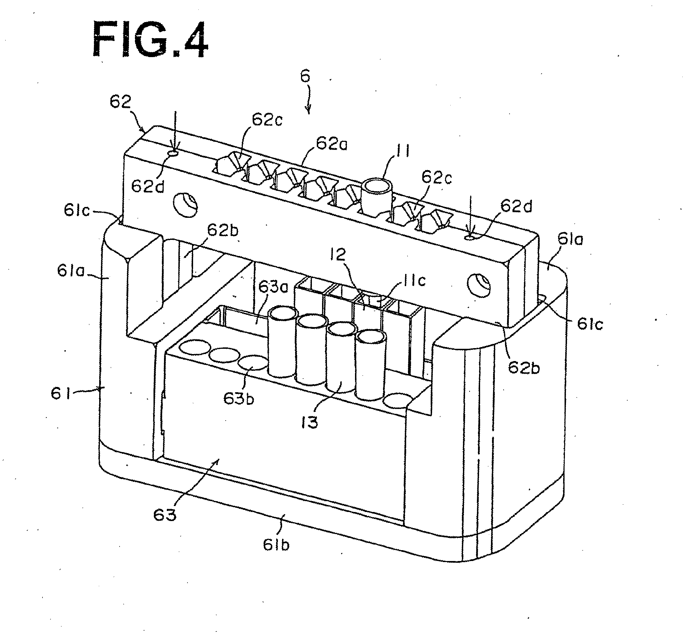

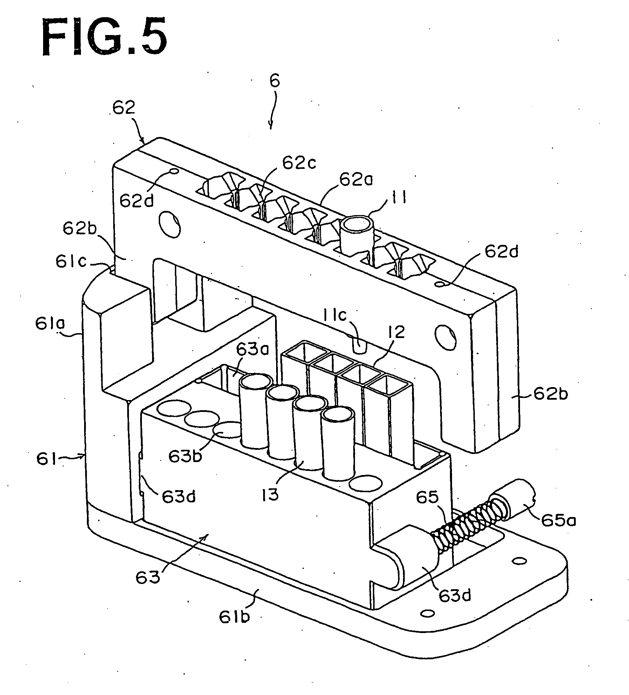

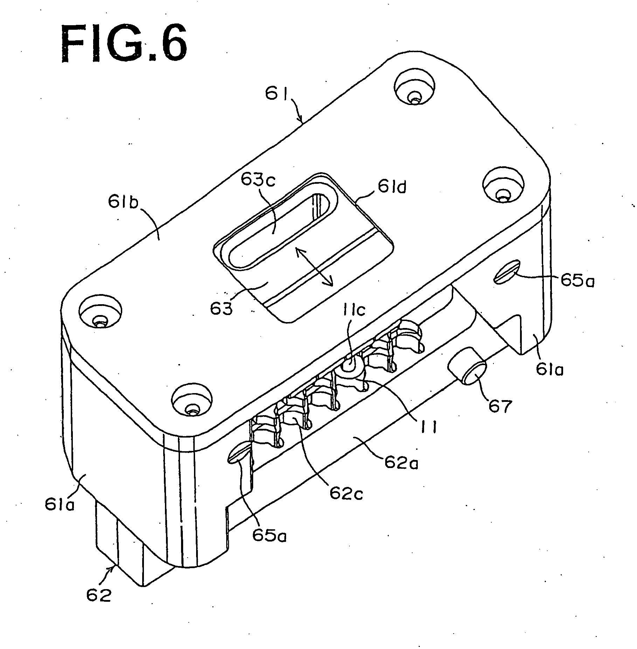

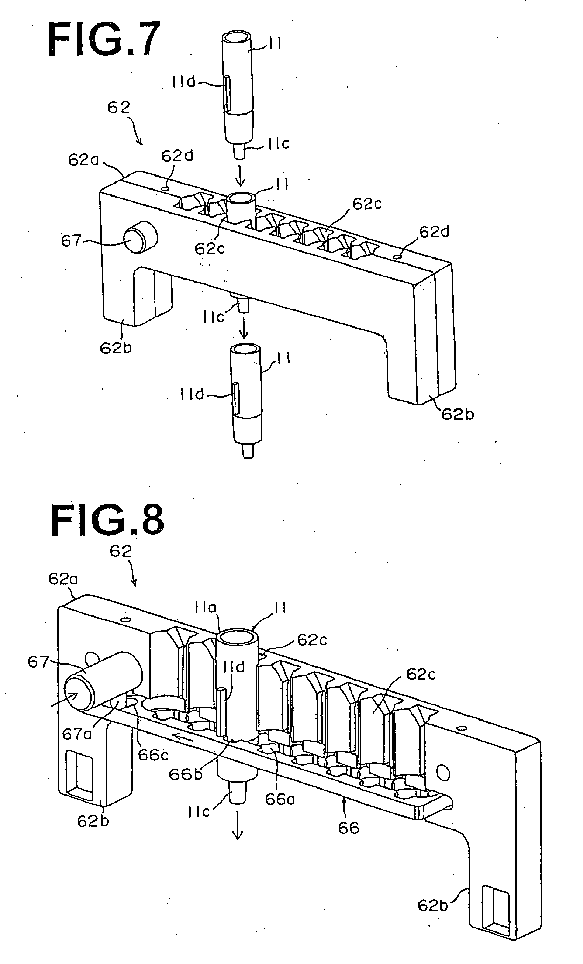

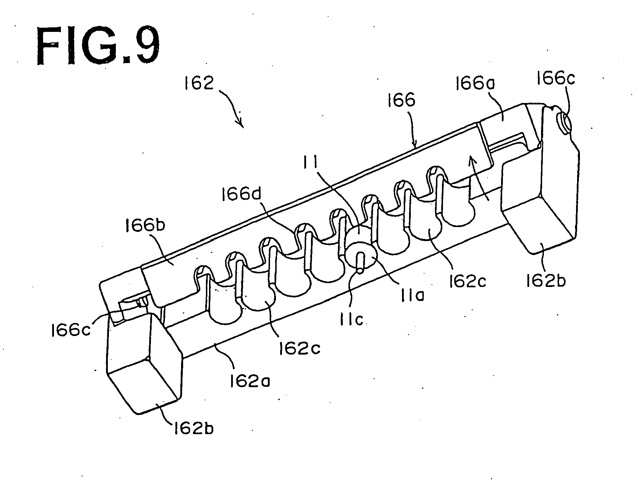

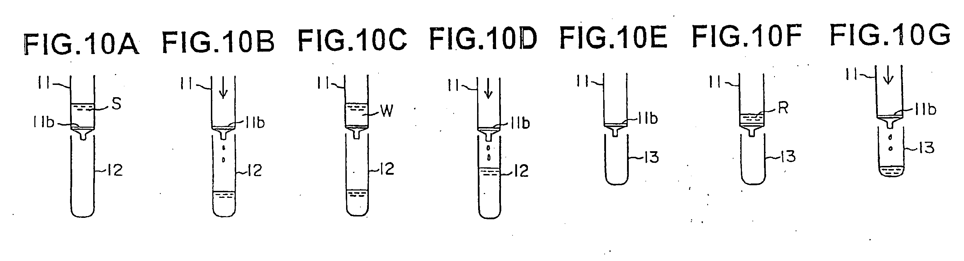

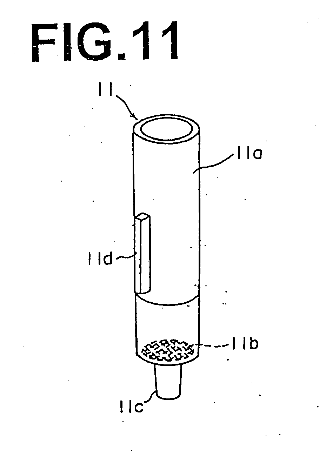

Figure 1 is a perspective view showing a nucleic acid extracting apparatus, on which an embodiment of the rack in accordance with the present invention has been loaded, with a cover being removed for clearness. Figure 2 is a block diagram showing mechanisms of the nucleic acid extracting apparatus of Figure 1. Figure 3 is a perspective view showing the embodiment of the rack in accordance with the present invention. Figure 4 is a perspective view showing the rack of Figure 3 in the state in which the rack is being used. Figure 5 is a perspective view showing an urging structure of the rack with part of the rack being broken away for clearness. Figure 6 is a perspective view showing a bottom structure of the rack. Figure 7 is a perspective view showing how an extracting cartridge is loaded into a cartridge holder of the rack and discharged from the cartridge holder. Figure 8 is a perspective view showing an internal structure of the cartridge holder with part of the cartridge holder being broken away for clearness. Figure 9 is a perspective view showing a different example of a cartridge holder, which is in an open state. Figures 10A to 10G are flow diagrams showing an extracting operation of the nucleic acid extracting apparatus. Figure 11 is a perspective view showing the extracting cartridge.

A nucleic acid extracting apparatus 1 illustrated in Figure 1, for which the rack in accordance with the present invention is used, extracts a nucleic acid from a sample liquid by use of an extracting cartridge (a filter cartridge) 11 illustrated in Figure 11. As illustrated in Figure 11, the extracting cartridge 11 comprises a tubular main body 11a having an opening at its top end. The extracting cartridge 11 also comprises a filter member 11b which is held within the tubular main body 11a and at a bottom of the tubular main body 11a. Part of the tubular main body 11a, which part is lower than the filter member 11b is formed in a funnel-like shape. Also, a discharging bottom end 11c, which has a nozzle-like shape having a reduced diameter, protrudes by a predetermined length from a center region of the bottom of the funnel-like part of the tubular main body 11a. Further, vertically extending protrusions 11d, 11d are formed on opposite sides of a side wall of the tubular main body 11a. As will be described later, a sample liquid, a washing liquid, or a recovery liquid is injected through the top opening of the tubular main body 11a into the extracting cartridge 11. Also, pressurized air is introduced through the top opening of the tubular main body 11a into the extracting cartridge 11 in order to cause the sample liquid, the washing liquid, or the recovery liquid to pass through the filter member 11b and to discharge the liquid through the discharging bottom end 11c into one of waste liquid vessels 12, 12, ... or recovery vessels 13, 13, ..., which will be described later. In the example of Figure 11, the tubular main body 11a comprises an upper half and a lower half, which are fitted to each other.

Basically, the nucleic acid extracting apparatus 1 performs the extraction of the nucleic acid with the extracting steps illustrated in Figures 10A to 10G. Specifically, firstly, in the step illustrated in Figure 10A, a sample liquid S containing the nucleic acid, which sample liquid S has been subjected to dissolution processing, is injected into the extracting cartridge 11, which is located above the corresponding waste liquid vessel 12. Thereafter, in the step illustratedin Figure 10B, the pressurized air is introduced into the extracting cartridge 11, and the area within the extracting cartridge 11 is thus pressurized. As a result, the sample liquid S is caused to pass through the filter member 11b of the extracting cartridge 11 under pressure, and the nucleic acid contained in the sample liquid S is adsorbed to the filter member 11b. The liquid having passed through the filter member 11b is discharged into the corresponding waste liquid vessel 12.

Thereafter, in the step illustrated in Figure 10C, a washing liquid W is automatically injected into the extracting cartridge 11. Also, in the step illustrated in Figure 10D, the pressurized air is introduced into the extracting cartridge 11, and the area within the extracting cartridge 11 is thus pressurized. As a result, the washing liquid W is caused to pass through the filter member 11b of the extracting cartridge 11 under pressure. In this manner, impurities are removed by the washing liquid W from the extracting cartridge 11, while the nucleic acid is being kept in the state in which the nucleic acid has been adsorbed to the filter member 11b. The washing liquid W having passed through the filter member 11b is discharged into the waste liquid vessel 12. The step illustrated in Figure 10C and the step illustrated in Figure 10D may be iterated a plurality of times.

Thereafter, in the step illustrated in Figure 10E, the waste liquid vessel 12, which is located under the extracting cartridge 11, is replaced by the recovery vessel 13. Also, in the step illustrated in Figure 10F, a recovery liquid R is automatically injected into the extracting cartridge 11. Thereafter, in the step illustrated in Figure 10G, the pressurized air is introduced into the extracting cartridge 11, and the area within the extracting cartridge 11 is thus pressurized. As a result, the recovery liquid R is caused to pass through the filter member 11b of the extracting cartridge 11 under pressure. In this manner, the binding force between the filter member 11b and the nucleic acid is weakened. The nucleic acid having been adsorbed to the filter member 11b of the extracting cartridge 11 is thus separated by the recovery liquid R from the filter member 11b. The recovery liquid R, which now contains the nucleic acid, is discharged from the extracting cartridge 11 and recovered into the recovery vessel 13.

The filter member 11b of the extracting cartridge 11 has a porosity such that the nucleic acid is basically capable of passing through the pores. The surface of the filter member 11b has characteristics of adsorbing the nucleic acid, which is contained in the sample liquid, with chemical binding force. The filter member 11b is constituted such that the filter member 11b keeps the adsorption of the nucleic acid during the washing with the washing liquid, and such that the filter member 11b reduces the force of adsorption of the nucleic acid and releases the nucleic acid during the recovery of the nucleic acid with the recovery liquid. Specifically, by way of example, as described in, for example, U.S. patent Laid-Open No. 20030170664, the filter member 11b may be constituted of an organic high-molecular weight material having a hydroxyl group on a surface. The organic high-molecular weight material having the hydroxyl group on the surface shouldpreferably be a surface saponification product of an acetyl cellulose. The acetylcellulose may be monoacetylcellulose, diacetylcellulose, or triacetylcellulose. Among the above-enumerated acetylcelluloses, the triacetylcellulose is particularly preferable. The surface of the surface saponification product of the acetylcellulose has been saponified by contact with a saponification processing liquid (e.g., NaOH), and the structure body of the surface saponification product of the acetylcellulose is constituted of the acetylcellulose. In such cases, the quantity (the density) of the hydroxyl group in the surface is capable of being adjusted with the degree of the surface saponification processing (i.e., the surface saponification degree). In order for the effect of adsorbing the nucleic acid to be enhanced, the quantity of the hydroxyl group should preferably be as large as possible. For example, in the cases of the acetylcellulose, such as the triacetylcellulose, the surface saponification degree should preferably be at least approximately 5%, and should more preferably_be at least approximately 10%. The acetylcellulose should preferably take on the form of a porous film.

The aforesaid sample liquid S containing the nucleic acid is prepared with a process, wherein a liquid in which the nucleic acid has been dispersed is prepared with the dissolution processing of a sample, which contains a cell or a virus, and a water-soluble organic solvent is added to the liquid in which the nucleic acid has been dispersed. For example, in the cases of diagnostic fields, the sample liquid S containing the nucleic acid may be a liquid having been prepared from an organism material, such as a humor having been taken as a sample (e.g., whole blood, blood plasma, blood serum, urine, feces, semen, or saliva); a plant (or part of a plant) ; an animal (or part of an animal). Also, the sample liquid S containing the nucleic acid may be a liquid having been prepared from a dissolution product or a homogenate of one of the above-enumerated organism materials. With the dissolution processing, a sample is processed with an aqueous solution containing a reagent for dissolving a cell membrane and a nuclear membrane and solubilizing the nucleic acid. (The reagent is a solution containing, for example, a guanidine salt, a surface active agent, and a proteolytic enzyme.) For example, in cases where the sample is whole blood, red blood corpuscles and various proteins are decomposed and converted into low-molecular weight substances in order for nonspecific adsorption to the filter member 11b and clogging of the filter member 11b to be prevented from occurring, and dissolution of white blood corpuscles and a nuclear membrane is performed such that the nucleic acid to be extracted may be solubilized. Examples of the water-soluble organic solvents include ethanol, isopropanol, and propanol. Among the above-enumerated water-soluble organic solvents, ethanol is preferable. The concentration of the water-soluble organic solvent should preferably fall within the range of 5% by weight to 90% by weight, and should more preferably fall within the range of 20% by weight to 60% by weight. The concentration of ethanol added should particularly preferably be as high as possible, provided that an agglomerate does not occur.

The washing liquid W has the functions of washing off impurities contained in the sample liquid, which impurities have clung to the filter member 11b together with the nucleic acid. The washing liquid W has a composition such that the washing liquid W does not cause the nucleic acid to be separated from the filter member 11b and causes the impurities to be separated from the filter member 11b. The washing liquid W is constituted of a solution containing a principal agent and a buffer agent. When necessary, the solution constituting the washing liquid W may also contain a surface active agent. Examples of the principal agents include aqueous solutions of methanol, ethanol, isopropanol, n-isopropanol, butanol, and acetone. The concentration of the aqueous solution acting as the principal agent may fall within the range of approximately 10% by weight to approximately 100% by weight. The concentration of the aqueous solution acting as the principal agent should preferably fall within the range of approximately 20% by weight to approximately 100% by weight, and should more preferably fall within the range of approximately 40% by weight to approximately 80% by weight.

The recovery liquid R should preferably have a low salt concentration. In particular, the recovery liquid R should preferably be constituted of a solution having a salt concentration of at most 0. 5M. For example, purified distilled water, a TE buffer, or the like, may be used as the recovery liquid R.

As illustrated in Figure 1 and Figure 2, the nucleic acid extracting apparatus 1 comprises a loading mechanism 3, a pressurized air supplying mechanism 4, and a liquid injecting mechanism 5, which are located on an apparatus main body 2. The loading mechanism 3 supports a rack 6, which is an embodiment of the rack in accordance with the present invention and holds a plurality of extracting cartridges 11, 11, ..., the plurality of the waste liquid vessels 12, 12, ..., and the plurality of the recovery vessels 13, 13, ... The pressurized air supplying mechanism 4 introduces the pressurized air into each of the extracting cartridges 11, 11, ... The liquid injecting mechanism 5 injects the washing liquid W into each of the extracting cartridges 11, 11, ... The liquid injecting mechanism 5 also injects the recovery liquid R into each of the extracting cartridges 11, 11, ... The rack 6, the loading mechanism 3, the pressurized air supplying mechanism 4, and the liquid injecting mechanism 5 will hereinbelow be described in more detail.

### <Rack and loading mechanism>

The loading mechanism 3 comprises a loading base 21, which is located on a front lower part of the apparatus main body 2. The rack 6, which holds the plurality of the extracting cartridges 11, 11, ..., the plurality of the waste liquid vessels 12, 12, ..., and the plurality of the recovery vessels 13, 13, ..., is located on the loading base 21. As illustrated in Figure 3 to Figure 8, the rack 6 comprises a stand 61, a cartridge holder 62, and a vessel holder 63.

The stand 61 is provided with pillar-shaped sections 61a, 61a, which are spaced apart from each other. The pillar-shaped sections 61a, 61a of the stand 61 hold the cartridge holder 62 such that the cartridge holder 62 is capable of moving vertically. The stand 61 is also provided with a bottom plate 61b, on which the pillar-shaped sections 61a, 61a are supported. The region of the bottom plate 61b, which region is located between the pillar-shaped sections 61a, 61a, holds the vessel holder 63 such that the vessel holder 63 is capable of undergoing forward and backward movements.

The cartridge holder 62 comprises a holding section 62a, which extends horizontally, and support legs 62b, 62b, which extend vertically from opposite end regions of the holding section 62a. Each of the support legs 62b, 62b of the cartridge holder 62 is inserted for vertical movement into one of vertically extending sliding grooves 61c, 61c, each of which is formed approximately at a middle region of one of the pillar-shaped sections 61a, 61a of the stand 61. The cartridge holder 62 is capable of being dismounted from the stand 61 by being pulled upwardly from the sliding grooves 61c, 61c of the stand 61. In cases where, for example, the extracting cartridges 11, 11, ... having been used are to be scrapped, the cartridge holder 62 is removed as illustrated in Figure 7.

The holding section 62a of the cartridge holder 62 has a plurality of holding holes 62c, 62c, ..., which stand side by side with one another. Each of the extracting cartridges 11, 11, ... is inserted from above into one of the holding holes 62c, 62c, ... of the cartridge holder 62. As will be described later, lower ends of the protrusions 11d, 11d, which are formed on the opposite sides of the side wall of the tubular main body 11a of the extracting cartridge 11, are engaged with an engagement member 66 (illustrated in Figure 8) located in the cartridge holder 62 and are held by the engagement member 66. The extracting cartridge 11 is thus held by the cartridge holder 62 in the state in which the discharging bottom end 11c of the extracting cartridge 11 is projected from the bottom surface of the cartridge holder 62 and exposed to the exterior.

The cartridge holder 62 has a two-part structure, which is formed with joining of a front plate material and a rear plate material. The extracting cartridge 11 is held between the front plate material and the rear plate material. The front plate material, which is located on the side capable of being seen by the operator, should preferably be constituted of a transparent material, such that the state of the extracting cartridge 11 having been held is capable of being observed. In such cases, for easiness of the observation, the rear plate material should preferably be constituted of a colored material.

The cartridge holder 62 also has pin receiving holes 62d, 62d, which are formed at opposite areas of the top surface of the cartridge holder 62. In the state in which the extracting cartridges 11, 11, ... are to be used for the extraction of the nucleic acid, each of bottom ends 49a, 49a of push pins 49, 49 (illustrated in Figure 1), which will be described later, engages with one of the pin receiving holes 62d, 62d of the cartridge holder 62 and pushes down the cartridge holder 62. As illustrated in Figure 3, in the state in which the cartridge holder 62 is located at the raised position, the discharging bottom end 11c of each of the extracting cartridges 11, 11, ... having been held by the cartridge holder 62 is located at the position more upward than the waste liquid vessels 12, 12, ... and the recovery vessels 13, 13, ... having been set on the vessel holder 63. As illustrated in Figure 4, in the state in which the cartridge holder 62 has been pushed down by the push pins 49, 49 acting as the position adjusting means, the discharging bottom end 11c of each of the extracting cartridges 11, 11, ... having been held by the cartridge holder 62 is inserted by a predetermined length into the corresponding one of the waste liquid vessels 12, 12, ..., which have been set on the vessel holder 63, or the corresponding one of the recovery vessels 13, 13, ..., which have been set on the vessel holder 63.

The vessel holder 63 has a box-like shape and is located on the bottom plate 61b of the stand 61 such that the vessel holder 63 is capable of sliding horizontally to the front and rear sides. The upper part of the vessel holder 63 is provided with a plurality of waste liquid vessel holding holes 63a, 63a, ..., which stand side by side in a row extending horizontally, and a plurality of recovery vessel holding holes 63b, 63b, ..., which stand side by side in a row extending horizontally. The row of the waste liquid vessel holding holes 63a, 63a, ... and the row of the recovery vessel holding holes 63b, 63b, ... are parallel with each other. The plurality of the waste liquid vessels 12, 12, ... are held in a row within the waste liquid vessel holding holes 63a, 63a, ..., respectively, which are located on the rear side. Also, the plurality of the recovery vessels 13, 13, ... are held in a row within the recovery vessel holding holes 63b, 63b, ..., respectively, which are located on the front side. The waste liquid vessel holding holes 63a, 63a, ... are located at the pitches identical with the pitches of the holding holes 62c, 62c, ... of the cartridge holder 62 and at the positions corresponding to the positions of the holding holes 62c, 62c, ... of the cartridge holder 62. Also, the recovery vessel holding holes 63b, 63b, ... are located at the pitches identical with the pitches of the holding holes 62c, 62c, ... of the cartridge holder 62 and at the positions corresponding to the positions of the holding holes 62c, 62c, ... of the cartridge holder 62. The vessel holder 63 is thus set such that each of the waste liquid vessels 12, 12, ... or each of the recovery vessels 13, 13, ... is located under one of the extracting cartridges 11, 11, ... having been held by the cartridge holder 62. Such that the waste liquid vessels 12, 12, ... and the recovery vessels 13, 13, ... may be discriminated from each other, the sizes, the shapes, or the like, of the waste liquid vessels 12, 12, ... are different from the sizes, the shapes, or the like, of the recovery vessels 13, 13, ... For example, the waste liquid vessels 12, 12, ... for accommodating both the discharged liquid of the sample liquid S and the discharged liquid of the washing liquid W should have accommodation volumes larger than the accommodation volumes of the recovery vessels 13, 13, ... Therefore, the waste liquid vessels 12, 12, ... are constituted of vessels having lengths or cross-sectional areas larger than the lengths or the cross-sectional areas of the recovery vessels 13, 13, ...

The vessel holder 63 is urged toward the front side by urging members 65, 65, which are incorporated in the stand 61. Specifically, as illustrated in Figure 5, each of spring receiving protrusions 63d, 63d is formed at one of opposite side regions of the vessel holder 63. Each of the spring receiving protrusions 63d, 63d is inserted into one of long grooves (not shown), which are formed in opposite internal side surfaces of the stand 61, such that the spring receiving protrusion 63d is capable of moving horizontally to the front and rear sides. Each of the urging members 65, 65 incorporated in the stand 61 is constituted of a coiled spring located in a state in which the coiled spring is contracted horizontally. One end of each of the urging members 65, 65 is brought into abutment with a rear part of the corresponding spring receiving protrusion 63d within the stand 61. The other end of each of the urging members 65, 65 is brought into abutment with one of fixtures 65a, 65a, which are secured to an internal rear surface of the stand 61. The vessel holder 63 is thus urged toward the front side. Also, an advanced position (i.e., a first position) of the vessel holder 63 is adjusted and restricted by the spring receiving protrusions 63d, 63d of the vessel holder 63, which come into abutment with front ends of the long grooves of the stand 61. At the time at which the vessel holder 63 is located at the first position, the waste liquid vessels 12, 12, ... are located at the positions just below the corresponding extracting cartridges 11, 11, ...

Figure 6 is a perspective view showing a bottom structure of the rack 6. The bottom plate 61b of the stand 61 has an opening 61d at a middle area. Also, the bottom surface of the vessel holder 63 has a laterally long engagement recess 63c, which stands facing the opening 61d of the stand 61. In cases where the vessel holder 63 takes the advanced position (i.e., the first position), the engagement recess 63c of the vessel holder 63 is located at the position, which stands facing a front region of the opening 61d of the stand 61. From this state, the engagement recess 63c of the vessel holder 63 is capable of being moved to the position, which stands facing a rear region of the opening 61d of the stand 61. Also, at the time at which the rack 6 is loaded on the loading base 21 of the apparatus main body 2, an actuating member 31 (illustrated in Figure 2), which is projected upwardly from the loading base 21, engages with the engagement recess 63c of the vessel holder 63 through the opening 61d of the stand 61. The actuating member 31 is moved to the rear side in accordance with the actuation of a vessel changeover motor (a DC motor) 32, and the vessel holder 63 is moved by the actuating member 31 to the rear side. The vessel holder 63 is thus moved to a second position, at which the recovery vessels 13, 13, ... are located at the position just below the corresponding extracting cartridges 11, 11, ... In this manner, the movements (i.e., the forward and backward movements) of the vessel holder 63 for the vessel changeover are performed with the actuating member 31 the loading base 21. The vessel changeover motor 32 is controlled in accordance with results of detection made by position sensors 33a and 33b (illustrated in Figure 2). ...

The waste liquid vessel holding holes 63a, 63a, ... and the recovery vessel holding holes 63b, 63b, ... of the vessel holder 63 are constituted of bottomed holes. Therefore, in cases where a liquid drops into the waste liquid vessel holding holes 63a, 63a, ... or the recovery vessel holding holes 63b, 63b, ... in the state in which the waste liquid vessels 12, 12, ... have not been set in the waste liquid vessel holding holes 63a, 63a, ... or in which the recovery vessels 13, 13, ... have not been set in the recovery vessel holding holes 63b, 63b, ..., the problems are capable of being prevented from occurring in that the liquid flows out to the exterior and contaminates the exterior equipment.

As illustrated in Figure 7, both the loading of each of the extracting cartridges 11, 11, ... into the cartridge holder 62 and the discharging of each of the extracting cartridges 11, 11, ... from the cartridge holder 62 are performed in one direction, i.e. the downward direction. Specifically, the extracting cartridge 11 is inserted into the corresponding holding hole 62c of the cartridge holder 62 from above. The extracting cartridge 11 is thus engaged with the engagement member 66 (illustrated in Figure 8) of the cartridge holder 62 and held by the engagement member 66. By a releasing operation of the engagement member 66, the extracting cartridge 11 is disengaged from the engagement member 66 allowed to fall down from the cartridge holder 62 and scrapped.

As illustrated in Figure 8, horizontal grooves are formed under the holding holes 62c, 62c, ... of the holding section 62a of the cartridge holder 62. The plate-shaped engagement member 66 is held in the horizontal grooves of the holding section 62a of the cartridge holder 62, such that the engagement member 66 is capable of sliding laterally. The engagement member 66 has a laterally long opening 66a, which communicates with the holding holes 62c, 62c, ... The engagement member 66 also has a plurality of notches 66b, 66b, ..., which are formed along a side of the opening 66a. The number of the notches 66b, 66b, ... corresponds to the number of the holding holes 62c, 62c, ... Further, the engagement member 66 has an oblique cam groove 66c, which is formed at a position in the vicinity of one end of the engagement member 66. The tubular main body 11a of each of the extracting cartridges 11, 11, ... is capable of being inserted into the opening 66a, and the protrusion 11d of the extracting cartridge 11 is capable of being inserted into the notch 66b.

Also, an operating push button 67 is held at a position in the vicinity of the one end of the cartridge holder 62, such that the operating push button 67 is capable of being pushed into cartridge holder 62. The operating push button 67 is located above the engagement member 66. The operating push button 67 is urged to a projecting direction by a spring (not shown), which is located within the cartridge holder 62. A cam pin 67a is projected from the bottom of the operating push button 67. The cam pin 67a of the operating push button 67 is engaged with the cam groove 66c of the engagement member 66. In accordance with the push-in operation of the operating push button 67, the campin 67a of the operating push button 67 moves along the cam groove 66c of the engagement member 66 in order to move the engagement member 66 laterally. In cases where the operating push button 67 is in the projected state (i.e., the non-operating state), and the engagement member 66 is located at the position illustrated in Figure 8, each of the notches 66b, 66b, ... of the engagement member 66 is located at a position shifted from the center point of the corresponding holding hole 62c of the cartridge holder 62, and the protrusion 11d of the extracting cartridge 11 having been inserted into the holding hole 62c of the cartridge holder 62 engages with an area of the top surface of the engagement member 66, which area is located between the adjacent notches 66b, 66b. The extracting cartridge 11 is thus supported as illustrated in Figure 8. When the operating push button 67 is pushed into the cartridge holder 62 from the state described above, the engagement member 66 is moved in the direction indicated by the arrow in Figure 8, and the position of the notch 66b of the engagement member 66 coincides with the position of the protrusion 11d of the extracting cartridge 11. As a result, the extracting cartridge 11 is disengaged from the engagement member 66. In this manner, all of the extracting cartridges 11, 11, ... are simultaneously allowed to pass through the holding holes 62c, 62c, ... of the cartridge holder 62 and the opening 66a of the engagement member 66 and to fall down together from the cartridge holder 62 with a single operation. In accordance with an operation of the operating push button 67 for returning to the projected direction, the engagement member 66 is returned to the position for engagement with the extracting cartridges 11, 11, ...

As described above, both the loading of each of the extracting cartridges, 11, 11, ... into the cartridge holder 62 and the discharging of each of the extracting cartridges 11, 11, ... from the cartridge holder 62 are performed in one direction. Therefore, there is no risk that the discharging bottom end 11c of the extracting cartridge 11, to which the discharged liquid has clung, will come into contact with the internal area of each of the holding holes 62c, 62c, ... of the cartridge holder 62, or the like. Accordingly, the problems with regard to contamination are capable of being prevented from occurring. Also, in lieu of the bottom end region of the tubular main body 11a of each of the extracting cartridges 11, 11, ..., the protrusion 11d of the extracting cartridge 11 is engaged with the engagement member 66. Since the region in the vicinity of the discharging bottom end 11c, to which the liquid is apt to cling, is not engaged with the engagement member 66, the problems with regard to contamination are capable of being prevented from occurring. Further, since the operator need not touch on the extracting cartridges 11, 11, ..., and the extracting cartridges 11, 11, ... are capable of being discharged together from the cartridge holder 62 with a single operation, the work is capable of being performed efficiently.

### <Pressurized air supplying mechanism>

As illustrated in Figure 1 and Figure 2, the pressurized air supplying mechanism 4 comprises a pressurizing head 40, which is capable of moving vertically with respect to the rack 6 of the loading mechanism 3. The pressurized air supplying mechanism 4 also comprises a plurality of (in this example, eight) air nozzles 41, 41, ..., which are fitted to the pressurizing head 40 and located in a row. The pressurized air supplying mechanism 4 further comprises an air pump 43 for producing the pressurized air. The pressurized air supplying mechanism 4 still further comprises a relief valve 44 (illustrated in Figure 2). The pressurized air supplying mechanism 4 also comprises a plurality of on-off valves 45, 45, ..., which are connected respectively to the air nozzles 41, 41, ... and which are turned on and off independently. The pressurized air supplying mechanism 4 further comprises a plurality of pressure sensors 46, 46, ..., which are respectively associated with the air nozzles 41, 41, ... The pressurized air supplying mechanism 4 successively supplies the pressurized air into the extracting cartridges 11, 11, ...

The pressurizing head 40 is held for vertical movement by guide rods 24, 24, which extend vertically between an intermediate frame 22 and a top frame 23 of the apparatus main body 2. Also, a ball nut 40a secured to the pressurizing head 40 is engaged with a ball screw 25, which extends vertically between the intermediate frame 22 and the top frame 23 of the apparatus main body 2. The ball screw 25 is rotated by a vertical movement motor (a pulse motor) 47 (illustrated in Figure 2) via a timing belt and a pulley. In accordance with the rotation of the ball screw 25, the pressurizing head 40 is moved vertically. The pressurizing head 40 is moved by being controlled in accordance with the results of detection of photo sensors 48a, 48b, and 48c (illustrated in Figure 2). The pressurizing head 40 is also provided with the push pins 49, 49, which are located on opposite sides of the pressurizing head 40 and act as the position adjusting means. Each of the push pins 49, 49 is urged by a spring 49b downwardly and is capable of moving vertically. Each of the bottom ends 49a, 49a of the push pins 49, 49 engages with one of the pin receiving holes 62d, 62d, which are formed in the top surface of the cartridge holder 62. The push pins 49, 49 thus adjust the position of the cartridge holder 62 and push down the cartridge holder 62.

The push pins 49, 49 of the pressurizing head 40 are located so as to push the front side positions on the cartridge holder 62, such that the push pins 49, 49 do not interfere with horizontal movements of a washing liquid injecting nozzle 51w and a recovery liquid injecting nozzle 51r, which will be described later, in the state in which the push pins 49, 49 push down the cartridge holder 62.

The air nozzles 41, 41, ... are fitted for vertical movement to the pressurizing head 40 and are urged downwardly. Also, a sheet-shaped sealing material 42 is located under the air nozzles 41, 41, ... The sealing material 42 has a plurality of communication holes 42a, 42a, ... (illustrated in Figure 2), each of which corresponds to one of the air nozzles 41, 41, ... At the time at which the pressurizing head 40 is moved down, the bottom end of each of the air nozzles 41, 41, ... pushes the sealing material 42 against the top end opening of the corresponding extracting cartridge 11 having been set on the cartridge holder 62 and thus closes the top end opening of the corresponding extracting cartridge 11. Each of the air nozzles 41, 41, ... is thus capable of supplying the pressurized air through the communication hole 42a into the extracting cartridge 11.

In cases where the pressurized air contained in the pressurized air path between the air pump 43 and the on-off valves 45, 45, ... is to be discharged from the pressurized air path, the relief valve 44 is opened to the ambient atmosphere. The pressurized air circuit is constituted such that each of the on-off valves 45, 45, ... is turned on selectively in order to introduce the pressurized air from the air pump 43 via the corresponding air nozzle 41 into the corresponding extracting cartridge 11. Each of the pressure sensors 46, 46, ... is associated with one of the air nozzles 41, 41, ... and detects the internal pressure of the corresponding extracting cartridge 11. At the time at which the detected internal pressure of the extracting cartridge 11 becomes equal to a predetermined pressure range (for example 50-200kPa, and preferably 80-120kPa), the corresponding on-off valve 45 is turned off, and the supply of the pressurized air into the extracting cartridge 11 is ceased. Also, in cases where the detected internal pressure of the extracting cartridge 11 becomes lower than the predetermined value, it is judged that a liquid discharging operation for the extracting cartridge 11 has been completed.

In the descriptions of the embodiments, the air pump is a diaphragm pump. However, other kinds of pumps such as a plunger pump and a syring pump, which can function as a pressurized air source, may be used as the air pump.

### <Liquid injecting mechanism>

The liquid injecting mechanism 5 comprises the washing liquid injecting nozzle 51w and the recovery liquid injecting nozzle 51r, which are secured to a nozzle moving base 50 capable of moving horizontally. The liquid injecting mechanism 5 also comprises a washing liquid supplying pump 52w (illustrated in Figure 2) for supplying the washing liquid W, which has been accommodated in a washing liquid bottle 56w, into the washing liquid injecting nozzle 51w. The liquid injecting mechanism 5 further comprises a recovery liquid supplying pump 52r (illustrated in Figure 2) for supplying the recovery liquid R, which has been accommodated in a recovery liquid bottle 56r, into the recovery liquid injecting nozzle 51r. The liquid injecting mechanism 5 still further comprises a waste liquid bottle 57, which is located on the loading base 21.

The nozzle moving base 50 is held for horizontal movement by a guide rail 27, which extends horizontally and is secured to a vertical wall 26 of the apparatus main body 2. The horizontal movement of the nozzle moving base 50 is ceased successively above the extracting cartridges 11, 11, ... by a nozzle moving motor (not shown) constituted of a pulse motor. In a state of restoration of the nozzle moving base 50, the nozzle moving base 50 is stopped at the position above the waste liquid bottle 57. An end of the washing liquid injecting nozzle 51w and an end of the recovery liquid injecting nozzle 51r are bent downwardly. The washing liquid injecting nozzle 51w is connected to the washing liquid supplying pump 52w via a changeover valve 55w (illustrated in Figure 2). The washing liquid supplying pump 52w is connected to the washing liquid bottle 56w via the changeover valve 55w. Also, the recovery liquid injecting nozzle 51r is connected to the recovery liquid supplying pump 52r via a changeover valve 55r. The recovery liquid supplying pump 52r is connected to the recovery liquid bottle 56r via the changeover valve 55r. The washing liquid bottle 56w and the recovery liquid bottle 56r are fitted to a side of the apparatus main body 2. Each of the washing liquid supplying pump 52w and the recovery liquid supplying pump 52r is constituted of a syringe pump. A piston member of the washing liquid supplying pump 52w is actuated by a pump motor 53w (illustrated in Figure 2), which is constituted of a pulse motor, and in accordance with a result of a position detection made by a sensor 54w in order to inject a predetermined quantity of the washing liquid W. Also, a piston member of the recovery liquid supplying pump 52r is actuated by a pump motor 53r (illustrated in Figure 2), which is constituted of a pulse motor, and in accordance with a result of a position detection made by a sensor 54r in order to inject a predetermined quantity of the recovery liquid R.

Specifically, in cases where the washing liquid W is to be injected, the changeover valve 55w is changed over to the side for the washing liquid bottle 56w. Also, the pump motor 53w is actuated in order to retreat the piston member of the washing liquid supplying pump 52w, and the washing liquid W is thus sucked into the washing liquid supplying pump 52w. Thereafter, the changeover valve 55w is changed over to the side for the washing liquid injecting nozzle 51w. Also, the pump motor 53w is actuated in order to advance the piston member of the washing liquid supplying pump 52w, and the washing liquid W is thus discharged from the washing liquid injecting nozzle 51w into the waste liquid bottle 57 until air contained in the washing liquid path has been discharged. The actuation of the washing liquid supplying pump 52w is then ceased. Thereafter, the washing liquid injecting nozzle 51w is moved to the position above one of the extracting cartridges 11, 11, ... The actuation quantity of the washing liquid supplying pump 52w is then controlled, and the predetermined quantity of the washing liquid W is injected into the extracting cartridge 11.

In cases where the recovery liquid R is to be injected, the changeover valve 55r is changed over to the side for the recovery liquid bottle 56r. Also, the pump motor 53r is actuated in order to retreat the piston member of the recovery liquid supplying pump 52r, and the recovery liquid R is thus sucked into the recovery liquid supplying pump 52r. Thereafter, the changeover valve 55r is changed over to the side for the recovery liquid injecting nozzle 51r. Also, the pump motor 53r is actuated in order to advance the piston member of the recovery liquid supplying pump 52r, and the recovery liquid R is thus discharged from the recovery liquid injecting nozzle 51r into the waste liquid bottle 57 until air contained in the recovery liquid path has been discharged. The actuation of the recovery liquid supplying pump 52r is then ceased. Thereafter, the recovery liquid injecting nozzle 51r is moved to the position above one of the extracting cartridges 11, 11, ... The actuation quantity of the recovery liquid supplying pump 52r is then controlled and the predetermined quantity of the recovery liquid R is injected into the extracting cartridge 11.

The loading mechanism 3, the pressurized air supplying mechanism 4, and the liquid injecting mechanism 5 described above are controlled in accordance with an input operation performed from an operation panel 7 located at the top of the apparatus main body 2 and in accordance with a program incorporated within a control unit (not shown).

The extracting operation performed with the nucleic acid extracting apparatus 1 described above will hereinbelow be described in detail.

Firstly, the extracting cartridges 11, 11, ... are set in the cartridge holder 62 of the rack 6 of the loading mechanism 3. Also, the waste liquid vessels 12, 12, ... and the recovery vessels 13, 13, ... are set in the vessel holder 63 of the rack 6 of the loading mechanism 3. The rack 6 is then located on the loading base 21 of the apparatus main body 2. Thereafter, the sample liquid S, which has been subjected to the dissolution processing, is introduced with a pipette, or the like, successively into each of the extracting cartridges 11, 11, ... Alternatively, before the rack 6 is loaded on the nucleic acid extracting apparatus 1, the sample liquid S may be introduced into each of the extracting cartridges 11, 11, ... having been set in the rack 6.

Thereafter, the nucleic acid extracting apparatus 1 is actuated with an operation from the operation panel 7. The pressurizing head 40 of the pressurized air supplying mechanism 4 is moved downwardly by the vertical movement motor 47 of the pressurized air supplying mechanism 4, and the bottom ends 49a, 49a of the push pins 49, 49 engage with the pin receiving holes 62d, 62d of the cartridge holder 62. The push pins 49, 49 thus push down the cartridge holder 62 and adjust the position of the cartridge holder 62. Also, as illustrated in Figure 4, the push pins 49, 49 cause the discharging bottom end 11c of each of the extracting cartridges 11, 11, ... to be inserted by the predetermined length into the corresponding waste liquid vessel 12, such that the liquid discharged from the extracting cartridge 11 may not leak to the exterior due to scattering, or the like, and may not cause the problems with regard to contamination to occur. The pressurizing head 40 is moved downwardly even further. As a result, the bottom end of each of the air nozzles 41, 41, ... pushes the sealing material 42 against the top end opening of the corresponding extracting cartridge 11 and thus closes the top end opening of the corresponding extracting cartridge 11. Since the push pins 49, 49 adjust the position of the cartridge holder 62, each of the air nozzles 41, 41, ... is capable of accurately coming into close contact with the top end opening of the corresponding extracting cartridge 11 and is thus capable of reliably closing the top end opening of the corresponding extracting cartridge 11.

Thereafter, the operation for supplying the pressurized air is performed. Specifically, a first on-off valve 45 is turned on, and the air pump 43 is actuated in the state, in which the other on-off valves 45, 45, ... are turned off. As a result, the pressurized air is supplied from the air pump 43 through a first air nozzle 41 into a first extracting cartridge 11. At the time at which the pressure sensor 46 associated with the first air nozzle 41 detects that the pressure within the first extracting cartridge 11 has reached the predetermined pressure, the first on-off valve 45 is turned off. A second on-off valve 45 is then turned on, and the pressurized air is supplied from the air pump 43 through a second air nozzle 41 into a second extracting cartridge 11. The operation described above is iterated successively for the extracting cartridges 11, 11, ..., and the areas within all of the extracting cartridges 11, 11, ... are thus pressurized. When the sample liquid S is thus subjected to the pressure, the sample liquid S is caused to pass through the filter member 11b of each of the extracting cartridges 11, 11, ... , and the nucleic acid contained in the sample liquid S is adsorbed to the filter member 11b. Other liquid constituents of the sample liquid S are discharged through the discharging bottom end 11c of the extracting cartridge 11 into the corresponding waste liquid vessel 12. At the time at which all sample liquid S having been introduced into the extracting cartridge 11 has passed through the filter member 11b of the extracting cartridge 11, the pressure within the extracting cartridge 11 decreases to a level lower than a liquid discharging completion pressure. When the pressure sensors 46, 46, ... detect that the extracting operation has been finished for all of the extracting cartridges 11, 11, ..., the pressurizing head 40 is moved upwardly.

Thereafter, the washing processing is performed. Specifically, after the supply of the pressurized air, the pressurizing head 40 is moved upwardly as described above, and the air nozzles 41, 41, ... move away from the extracting cartridges 11, 11, ... When the pressurizing head 40 has been moved up to a height position at.which the pressurizing head 40 allows the horizontal movement of the nozzle moving base 50, the upward movement of the pressurizing head 40 is ceased. The washing processing is performed in the state illustrated in Figure 4, in which the discharging bottom end 11c of each of the extracting cartridges 11, 11, ... has been inserted into the corresponding waste liquid vessel 12. More specifically, the nozzle moving base 50 is moved horizontally, and the washing liquid injecting nozzle 51w is stopped at the position above the first extracting cartridge 11. In this state, a predetermined quantity of the washing liquid is injected from the washing liquid injecting nozzle 51w into the first extracting cartridge 11. The nozzle moving base 50 is then moved successively to the positions above the other extracting cartridges 11, 11, ..., and the injection of the washing liquid W from the washing liquid injecting nozzle 51w into the extracting cartridges 11, 11, ... is performed successively. When the injection of the washing liquid W has been finished for all of the extracting cartridges 11, 11, ..., the pressurizing head 40 is moved downwardly, and the bottom end of each of the air nozzles 41, 41, ... pushes the sealing material 42 against the top end opening of the corresponding extracting cartridge 11 and thus closes the top end opening of the corresponding extracting cartridge 11. Thereafter, in the same manner as that described above, the on-off valves 45, 45, ... are turned on successively, and the pressurized air is supplied into the extracting cartridges 11, 11, ... When the washing liquid W is thus subjected to the pressure, the washing liquid W is caused to pass through the filter member 11b of each of the extracting cartridges 11, 11, ..., and the impurities other than the nucleic acid are washed off by the washing liquid W. The washing liquid W having passed through the filter member 11b is discharged through the discharging bottom end 11c of the extracting cartridge 11 into the corresponding waste liquid vessel 12. At the time at which all washing liquid W contained in all of the extracting cartridges 11, 11, ... has passed through the filter members 11b, 11b, ... of the extracting cartridges 11, 11, ... and has thus been discharged from the extracting cartridges 11, 11, ..., the pressurizing head 40 is moved upwardly to the initial position. In cases where the washing processing is to be performed a plurality of times, the operation described above is iterated.

Thereafter, the recovery processing is performed. Specifically, firstly, in accordance with the upward movement of the pressurizing head 40 performed after the washing processing, the push pins 49, 49 move upwardly, and the cartridge holder 62 of the rack 6 also moves upwardly. The discharging bottom end 11c of each of the extracting cartridges 11, 11, ... is thus moved upwardly from the corresponding waste liquid vessel 12. Thereafter, the actuating member 31 of the loading mechanism 3 is operated in order to retreat the vessel holder 63. The recovery vessels 13, 13, ... are thus located under the extracting cartridges 11, 11, ... The vessel changeover is performed in this manner.

Thereafter, the pressurizing head 40 is moved downwardly, and the bottom ends 49a, 49a of the push pins 49, 49 engage with the pin receiving holes 62d, 62d of the cartridge holder 62. The push pins 49, 49 thus push down the cartridge holder 62 and keep the state in which the discharging bottom end 11c of each of the extracting cartridges 11, 11, ... has been inserted by the predetermined length into the corresponding recovery vessel 13. Also, the nozzle moving base 50 is moved horizontally, and the recovery liquid injecting nozzle 51r is stopped at the position above the first extracting cartridge 11. In this state, a predetermined quantity of the recovery liquid R is injected from the recovery liquid injecting nozzle 51r into the first extracting cartridge 11. The nozzle moving base 50 is then moved successively to the positions above the other extracting cartridges 11, 11, ..., and the injection of the recovery liquid R from the recovery liquid injecting nozzle 51r into the extracting cartridges 11, 11, ... is performed successively. When the injection of the recovery liquid R has been finished for all of the extracting cartridges 11, 11, ..., the pressurizing head 40 is moved downwardly even further in the same manner as that described above, and the bottom end of each of the air nozzles 41, 41, ... pushes the sealing material 42 against the top end opening of the corresponding extracting cartridge 11 and thus closes the top end opening of the corresponding extracting cartridge 11. Thereafter, the on-off valves 45, 45, ... are turned on successively, and the pressurized air is supplied into the extracting cartridges 11, 11, ... When the recovery liquid R is thus subjected to the pressure, the recovery liquid R is caused to pass through the filter member 11b of eachof the extracting cartridges 11, 11, ..., and the nucleic acid having been adsorbed to the filter member 11b is separated by the recovery liquid R from the filter member 11b. The nucleic acid having thus been separated from the filter member 11b is discharged together with the recovery liquid R through the discharging bottom end 11c of the extracting cartridge 11 into the corresponding recovery vessel 13. At the time at which all recovery liquid R contained in all of the extracting cartridges 11, 11, ... has thus been discharged from the extracting cartridges 11, 11, ..., the pressurizing head 40 is moved upwardly. At this stage, the series of the operations are finished.

The rack 6, for which the extracting operation has been finished, is unloaded from the loading base 21. Also, the cartridge holder 62 is dismounted from the rack 6. By the operation of the operating push button 67 of the cartridge holder 62, and all of the extracting cartridges 11, 11, ... having been used are allowed to fall down together and discharged from the cartridge holder 62. Further, extracting cartridges 11, 11, ... to be used next are loaded into the cartridge holder 62 from above. Furthermore, the waste liquid vessels 12, 12, ... are taken out from the vessel holder 63 and scrapped. The recovery vessels 13, 13, ... are taken out from the vessel holder 63. When necessary, the recovery vessels 13, 13, ... are closed with covers. Thereafter, the recovery vessels 13, 13, ... are subj ected to next nucleic acid analyzing processing, or the like.

Figure 9 is a perspective view showing a different example of a cartridge holder, which is in an open state. A cartridge holder 162 illustrated in Figure 9 has a structure for holding the extracting cartridges 11, 11, ... and a structure for discharging the extracting cartridges 11, 11, ..., which structures are different from the structures of the cartridge holder 62 described above.

As illustrated in Figure 9, the cartridge holder 162 comprises a holding section 162a, which extends horizontally. The cartridge holder 162 also comprises support legs 162b, 162b, which extend vertically from the opposite ends of the holding section 162a. The holding section 162a has a plurality of holding holes 162c, 162c, ..., which stand side by side with one another. Each of the extracting cartridges 11, 11, ... is inserted into one of the holding holes 162c, 162c, ... from above. The holding section 162a is divided into two halves along a plane, which passes through center points of the holding holes 162c, 162c, ..., and an engagement member 166 is constituted of one of the two halves. The engagement member 166 is provided with an inclining movement section 166a and an engagement section 166b, which is constituted of a plate material secured to a bottom surface of the inclining movement section 166a. Opposite end sides of a top part of the inclining movement section 166a are supported for the inclining movement by shafts 166c, 166c and at top end regions of the support legs 162b, 162b. The inclining movement section 166a is provided with a half of each of the holding holes 162c, 162c, ... The engagement section 166b is provided with a plurality of notches 166d, 166d, ..., each of which has a diameter smaller than the diameter of each of the holding holes 162c, 162c, ... In the state in which the engagement member 166 is closed, the extracting cartridge 11 is inserted from above into one of the holding holes 162c, 162c, ..., which are constituted between the holding section 162a and the inclining movement section 166a. The lower end part of the tubular main body 11a of the extracting cartridge 11 is engaged with and held by the corresponding one of the notches 166d, 166d, ... of the engagement section 166b.

Alternatively, as described above, the protrusions 11d, 11d may be formed on the opposite sides of the side wall of the tubular main body 11a of each of the extracting cartridges 11, 11, ... and may be engaged with and held by the engagement section 166b of the cartridge holder 162. In order for the liquid clinging to engagement section 166b to be prevented from occurring, in lieu of the lower end part of the tubular main body 11a of the extracting cartridge 11 being engaged with and held by the corresponding one of the notches 166d, 166d, ... of the engagement section 166b, the protrusions 11d, 11d of the tubular main body 11a of each of the extracting cartridges 11, 11, ... should preferably be engaged with and held by the engagement section 166b of the cartridge holder 162.

As in the embodiment described above, both the loading of each of the extracting cartridges 11, 11, ... into the cartridge holder 162 and the discharging of each of the extracting cartridges 11, 11, ... from the cartridge holder 162 are performed in one direction, i.e. in the downward direction. Specifically, the extracting cartridges 11, 11, ... are inserted into the holding holes 162c, 162c, ... from above and are engaged with and held by the engagement section 166b of the engagement member 166. Also, as illustrated in Figure 9, by the releasing operation of the engagement member 166 for the inclining movement to the opening direction, the inclining movement section 166a undergoes the inclining movement, and the engagement section 166b moves from the position under the extracting cartridges 11, 11, ... toward a side along the extracting cartridges 11, 11, ... and releases the engagement with the extracting cartridges 11, 11, ... In this manner, the extracting cartridges 11, 11, ... are allowed to fall down together with a single operation and discharged from the cartridge holder 162.

In the embodiment described above, the plurality of the extracting cartridges 11, 11, ..., the plurality of the waste liquid vessel 12, 12, ..., and the plurality of the recovery vessels 13, 13, ... are loaded as one set on the rack 6. Alternatively, only one extracting cartridge 11, only one waste liquid vessel 12, and only one recovery vessel 13 may be loaded as one set on the rack 6. In such cases, the size of the rack is capable of being kept small, and the mechanism of the rack is capable of being kept simple.

In the embodiment described above, a rack is set in a fixed manner. However, a plurality of racks may be mounted and the plurality of racks may be supplied and set to the extracting apparatus in turn by a rotating turret system. In such cases, attaching/detaching operations can be simplified.

Also, in the embodiment described above, one waste liquid vessel 12 is utilized for one extracting cartridge 11. Alternatively, one waste liquid vessel having a large capacity may be utilized for a plurality of the extracting cartridges 11, 11, ... in order to accommodate the liquid discharged from the plurality of the extracting cartridges 11, 11, ...

Further, in the embodiment described above, the extracting cartridges 11, 11, ... are located in one row. Alternatively, the extracting cartridges 11, 11, ... may be located in a plurality of rows. In such cases, the waste liquid vessels 12, 12, ... and the recovery vessels 13, 13, ... may be located in accordance with the plurality of the rows of the extracting cartridges 11, 11, ...

Furthermore, in the embodiment described above, the extracting cartridges 11, 11, ... are constituted as the plurality of the independent extracting cartridges. Alternatively, for example, a plurality of extracting cartridges, which are connected to one another in a row, may be utilized. In such cases, the shape of the holding section 62a of the rack 6 may be altered in accordance with the form of the plurality of the extracting cartridges having been connected to one another.

In the present embodiment, the washing processing is performed by the use of the washing liquid W. However, the washing processing is not always required depending on the filtering performance of the filter member 11b.

Further, in the embodiment as described above, the nucleic acid extracting apparatus is described. However, the present invention is not limited to the nucleic acid extracting apparatus. The present invention may also be adopted to a method for filtering various kinds of predetermined substance through contact with the filter member. Further, it is not necessary to recover the recovery liquid. The predetermined substance can be kept in contact with the filter member during analysis. A liquid for analyzing the reaction color may also be added.

## Claims

1. A rack (6) for an extracting apparatus for performing an extracting operation by use of at least one extracting cartridge (11) provided with a filter member (11b), the extracting operation comprising:
an injecting mechanism for injecting a sample liquid (S) containing a predetermined substance, into the extracting cartridge (11), the sample liquid (S) being thereby caused to pass through the filter member of the extracting cartridge, the predetermined substance contained in the sample liquid (S) being thus adsorbed to the filter member of the extracting cartridge (11),
wherein the rack (6) comprises a cartridge holder (62), which holds the at least one extracting cartridge (11), **characterized in that** the cartridge holder (62) comprises
- at least on holding hole (62c) adapted to receive an extracting cartridge (11) inserted from above;
- an engagement member (66) adapted to be engaged with and to hold said received extracting cartridge (11); and
- disengagement means adapted to disengage said at least one extracting cartridge (11) from the engagement member (66) such that
a direction, in which the at least one extracting cartridge (11) is loaded into the cartridge holder (62), and a direction, in which the at least one extracting cartridge is discharged from the cartridge holder, are identical with each other.

2. A rack as defined in claim 1, wherein, when said disengagement means release the at least one extracting cartridge from a state, in which the at least one extracting cartridge is held by the cartridge holder, with an operator being free from a touch on the at least one extracting cartridge, the at least one extracting cartridge (11) being thereby allowed to fall down from the cartridge holder and discharged.

3. A rack as defined in claim 1 or 2, wherein the at least one extracting cartridge is provided with a discharging bottom end (11c) for liquid discharging,
the cartridge holder (62) holds the at least one extracting cartridge (11) in a state in which the discharging bottom end of the at least one extracting cartridge is exposed to the exterior, and
the cartridge holder (62) allows the at least one extracting cartridge, which has been used, to fall down and discharges the at least one extracting cartridge, which has been used, such that only the part of the at least one extracting cartridge other than the discharging bottom end passes through the cartridge holder (62).

4. A rack as defined in any one of claims 1 to 3, wherein the cartridge holder (62) holds a plurality of extracting cartridges (11), and
the cartridge holder allows the plurality of the extracting cartridges to fall down together by a single operation of said disengagement means (67) and thereby discharges the plurality of the extracting cartridges.

5. A rack as defined in any one of claims 1 to 4, wherein the cartridge holder (62), which holds the at least one extracting cartridge (11), is releasably secured to the rack (6), and
the cartridge holder (62) is dismounted from the rack (6) at the time at which the at least one extracting cartridge (11) is to be discharged from the cartridge holder (62).

6. Use of a rack according to any of claims 1 to 5 for performing an extracting operation, comprising:
injecting a sample liquid, which contains a nucleic acid, into the extracting cartridge, the nucleic acid contained in the sample liquid being thus adsorbed to the filter member (11 b) of the extracting cartridge (11),
injecting a recovery liquid (R) into the extracting cartridge (11), and
pressurizing the area within the extracting cartridge (11) into which the recovery liquid (R) has been injected, the recovery liquid being thereby caused to pass through the filter member (11 b) of the extracting cartridge (11) under pressure, the nucleic acid having been adsorbed to the filter member (11 b) of the extracting cartridge (11) being thus separated by the recovery liquid from the filter member and recovered together with the recovery liquid.

## Patentansprüche

1. Gestell (6) für eine Ausziehvorrichtung zum Durchführen eines Ausziehvorgangs unter Verwendung mindestens einer mit einem Filterelement (11 b) ausgestatteten Ausziehkartusche (11), wobei der Ausziehvorgang umfasst:
einen Einspritzmechanismus zum Einspritzen einer eine vorbestimmte Substanz enthaltenden Probenflüssigkeit (S) in die Ausziehkartusche (11), wodurch die Probenflüssigkeit (S) veranlasst wird, das Filterelement der Ausziehkartusche zu passieren, damit die in der Probenflüssigkeit (S) enthaltene vorbestimmte Substanz an dem Filterelement der Ausziehkartusche (11) adsorbiert wird,
wobei das Gestell (6) einen Kartuschenhalter (62) aufweist, der mindestens eine Ausziehkartusche (11) hält, **dadurch gekennzeichnet, dass** der Kartuschenhalter (62) aufweist:
- mindestens ein Halteloch (62c), ausgebildet zum Aufnehmen einer von oben eingeführten Ausziehkartusche (11);
- ein Eingriffselement (66), ausgebildet für den Eingriff mit der aufgenommenen Ausziekartusche (11), um diese zu halten;
- eine Löseeinrichtung, ausgebildet zum Lösen der mindestens einen Ausziehkartusche (11) von dem Eingriffselement (66), so dass
eine Richtung, in der die mindestens eine Ausziehkartusche (11) in den Kartuschenhalter (62) geladen wird, und eine Richtung, in der die mindestens eine Ausziehkartusche von dem Kartuschenhalter gelöst wird, identisch miteinander sind.

2. Gestell nach Anspruch 1, bei dem, wenn die Löseeinrichtung die mindestens eine Ausziehkartusche aus einem Zustand, in welchem die mindestens eine Ausziehkartusche von dem Kartuschenhalter gehalten wird, löst, die mindestens eine Ausziehkartusche (11) aus dem Kartuschenhalter nach unten fallen und abbefördert werden kann, ohne dass eine Bedienungsperson die mindestens eine Ausziehkartusche berühren muss.

3. Gestell nach Anspruch 1 oder 2, bei dem die mindestens eine Ausziehkartusche mit einem Austrag-Bodenende (11 c) für den Flüssigkeitsaustrag ausgestattet ist,
der Kartuschenhalter (62), der mindestens eine Ausziehkartusche (11) in einem Zustand hält, in welchem das Austrag-Bodenende der mindestens einen Ausziehkartusche nach Außen hin frei ist, und
der Kartuschenhalter (62), der mindestens einen, gebrauchten Ausziehkartusche ermöglicht, nach unten zu fallen, und die mindestens eine Ausziehkartusche nach dem Gebrauch abbefördert, so dass nur derjenige Teil der mindestens einen Ausziehkartusche, der verschieden ist von dem Austrag-Bodenende, durch den Kartuschenhalter (62) gelangt.

4. Gestell nach einem der Ansprüche 1 bis 3, bei dem der Kartuschenhalter (62) eine Mehrzahl von Ausziehkartuschen (11) hält, und
der Kartuschenhalter welcher eine einzelne Betätigung der Löseeinrichtung (67) in mehreren Ausziehkartuschen ermöglicht, gemeinsam nach unten zu fallen, um dadurch die mehreren Ausziehkartuschen abzubefördern.

5. Gestell nach einem der Ansprüche 1 bis 4, bei dem der Kartuschenhalter (62), der die mindestens eine Ausziehkartusche (11) hält, lösbar an dem Gestell (6) gesichert ist, und
der Kartuschenhalter (62) von dem Gestell (6) zu einer Zeit entfernt wird, zu der die mindestens eine Ausziehkartusche (11) von dem Kartuschenhalter (62) abzubefördern ist.

6. Verwendung eines Gestells nach einem der Ansprüche 1 bis 5 zum Durchführen eines Ausziehvorgangs, umfassend:
Einspritzen einer eine Nukleinsäure enthaltenden Probenflüssigkeit in die Ausziehkartusche, so dass die in der Probenflüssigkeit enthaltene Nukleinsäure an dem Filterelement (11 b) der Ausziehkartusche (11) adsorbiert wird.
Einspritzen einer Gewinnungsflüssigkeit (R) in die Ausziehkartusche (11) und
Druckbeaufschlagen des Bereichs innerhalb der Ausziehkartusche (11) in den die Gewinnungsflüssigkeit (R) eingespritzt wurde, wodurch die Gewinnungsflüssigkeit veranlasst wird, das Filterelement (11 b) der Ausziehkartusche (11) unter Druck zu passieren, so dass die an dem Filterelement (11 b) der Ausziehkartusche (11) adsorbierte Nukleinsäure mittels der Gewinnungsflüssigkeit von dem Filterelement separiert und zusammen mit der Gewinnungsflüssigkeit gewonnen wird.

## Revendications

1. Râtelier (6) pour un appareil d'extraction pour exécuter une opération d'extraction en utilisant au moins une cartouche d'extraction (11) pourvue d'un élément filtrant (11b), l'appareil d'extraction comprenant :
un mécanisme d'injection pour injecter un liquide échantillon (5) contenant une substance prédéterminée dans la cartouche d'extraction (11), le liquide échantillon (5) étant de ce fait amené à passer à travers l'élément filtrant de la cartouche d'extraction, la substance prédéterminée contenue dans le liquide échantillon (5) étant ainsi adsorbée sur l'élément filtrant de la cartouche d'extraction (11),
dans lequel le râtelier (6) comprend un porte-cartouche (62), qui tient ladite au moins une cartouche d'extraction (11),
**caractérisé en ce que** le porte-cartouche (62) comprend
- au moins un trou de maintien (62c) adapté à recevoir une cartouche d'extraction (11) insérée depuis le dessus ;
- un élément d'engagement (66) adapté à être engagé avec et à tenir ladite cartouche d'extraction reçue (11) ; et
- des moyens de dégagement adaptés à dégager ladite au moins une cartouche d'extraction (11) depuis l'élément d'engagement (66), de telle façon que
une direction dans laquelle ladite au moins une cartouche d'extraction (11) est chargée dans le porte-cartouche (62), et une direction dans laquelle ladite au moins une cartouche d'extraction est déchargée depuis le porte-cartouche, sont identiques l'une avec l'autre.

2. Râtelier selon la revendication 1, dans lequel, quand lesdits moyens de dégagement libèrent ladite au moins une cartouche d'extraction depuis une situation dans laquelle ladite au moins une cartouche d'extraction est tenue par le porte-cartouche, alors qu'un opérateur n'a pas besoin de toucher ladite au moins une cartouche d'extraction, ladite au moins une cartouche d'extraction (11) étant de ce fait autorisée à tomber depuis le porte-cartouche et déchargée.

3. Râtelier selon la revendication 1 ou 2, dans lequel ladite au moins une cartouche d'extraction est pourvue d'une extrémité inférieure de décharge (11c) pour la décharge de liquide,
le porte-cartouche (62) tient ladite au moins une cartouche extraction (11) dans une situation dans laquelle l'extrémité inférieure de décharge de ladite au moins une cartouche d'extraction est exposée à l'extérieur, et
le porte-cartouche (62) permet à ladite au moins une cartouche d'extraction, qui a été utilisée, de tomber et il décharge ladite au moins une cartouche d'extraction, qui a été utilisée, de telle façon que seule la partie de ladite au moins une cartouche d'extraction autre que l'extrémité inférieure de décharge passe à travers le porte-cartouche (62).

4. Râtelier selon l'une quelconque des revendications 1 à 3, dans lequel le porte-cartouche (62) tient une pluralité de cartouches d'extraction (11), et
le porte-cartouche permet à la pluralité de cartouches d'extraction de tomber ensemble par une opération unique desdits moyens de dégagement (67) et décharge de ce fait la pluralité de cartouches d'extraction.

5. Râtelier selon l'une quelconque des revendications 1 acte 4, dans lequel le porte-cartouche (62), qui tient ladite au moins une cartouche d'extraction (11), est fixé de manière libérable sur le râtelier (6), et
le porte-cartouche (62) est démonté depuis le râtelier (6) au moment auquel ladite au moins une cartouche d'extraction (11) doit être déchargée depuis le porte-cartouche (62).

6. Utilisation d'un râtelier selon l'une quelconque des revendications 1 à 5 pour exécuter une opération d'extraction, comprenant :
l'injection d'un liquide échantillon, qui contient un acide nucléique, dans la cartouche d'extraction, l'acide nucléique contenu dans le liquide échantillon étant ainsi adsorbé sur l'élément filtrant (11b) de la cartouche d'extraction (11),
l'injection d'un liquide de récupération (R) dans la cartouche d'extraction (11), et
la mise sous pression de la zone dans la cartouche d'extraction (11) dans laquelle le liquide de récupération (R) a été injecté, le liquide de récupération étant ainsi amené à passer à travers l'élément filtrant (11b) de la cartouche d'extraction (11) sous pression, l'acide nucléique qui a été adsorbé sur l'élément filtrant (11 b) de la cartouche d'extraction (11) étant ainsi séparé par le liquide de récupération depuis l'élément filtrant et récupéré ensemble avec le liquide de récupération.
